# EUROPEAN PATENT APPLICATION

(11) **EP 3 428 317 A1**
(43) Date of publication of application: **16.01.2019**
(21) Application number: 17020297.2
(22) Date of filing: 12.07.2017
(51) Int. Cl.: C25B 15/08, F17C 5/06, C25B 1/12, F04B 45/053

(54) **SYSTEM FOR PRODUCING AND DISPENSING PRESSURIZED HYDROGEN**

(71) Applicant: Airbus Defence and Space GmbH, 82024 Taufkirchen (DE)
(72) Inventor: Adler, Robert, 2201 Gerasdorf (AT); Stephan, Markus, 2392 Dornbach (AT); Nagl, Christoph, 2534 Alland (AT); Gruber, Sarah, 2380 Perchtoldsdorf (AT); Raatschen, Willigert, 88090 Immenstaad a.B. (DE); Jehle, Walter, 88263 Horgenzell (DE); Lobentanzer, Hans, 81377 München (DE); Best, Simon, 81667 München (DE)
(74) Representative: Meel, Thomas

(57) **Abstract**

The invention relates to a system for producing and dispensing pressurized hydrogen comprising:
- a hydrogen generator (1), in particular an electrolyser,
- a hydraulic drive (16),
- two or more hydrogen storage tanks (10a, 10b, 10c), and
- a hydrogen dispensing unit (50),
- wherein each of the hydrogen storage tanks (10a, 10b, 10c) is capable of discharging hydrogen at a constant pressure by movement of an internal piston (11a, 11b, 11c),
- wherein at least one (10a) of the hydrogen storage tanks (10a, 10b, 10c) is arranged to act as compressor by actuation of the internal piston (11a) by means of the hydraulic drive (16), and
- wherein at least one (10a) of the hydrogen storage tanks (10a, 10b, 10c) is arranged to act as a constant pressure tank for storing and discharging hydrogen at a constant pressure.

## Description

The invention relates to a system for producing and dispensing pressurized hydrogen.

Concepts for Hydrogen refuelling stations are well developed. Hydrogen as energy carrier has been used since the first NASA missions to space and have subsequently been improved and applied to many different fields. The applications range from small to large energy storage, for refuelling vehicles such as bikes, forklifts, cars, bus, trucks, boats and trains or industrial applications.

In Germany there are about 30 refuelling stations for cars at the moment, which should increase to 400 in 2023. Worldwide there are more than 200 refuelling stations operative. In addition, there are fueling stations for forklifts and boats and some exotic applications like a refuelling station inside a hydrogen-heated and electrically powered home.

Hence there is a large variety of refuelling station concepts, which can be classified according to their
- turnover time of hydrogen:
   From "small" with 80kg hydrogen per day up to "large" with 1000kg hydrogen per day,
- the pressure they offer:
   350 bar, 700 bar or both,
- the way of refuelling (e.g. at ambient temperature, cooled H₂, etc.),
- the way of generating the hydrogen:
   on site, off site or pipeline,
- gaseous or liquid hydrogen.

It is an object of the present invention to provide a hydrogen production and refuelling system for local or home refuelling.

It is another object to provide a hydrogen refuelling system which is able to produce and dispense between 1 kg/day and 50 kg/day of hydrogen.

It is another object to provide a hydrogen refuelling system for consumer fuel cell vehicles which can be easily deployed almost everywhere (roads, gas stations, factories, homes ...) without depending on a specific infrastructure.

One or more of these objects are achieved by a system for producing and dispensing pressurized hydrogen comprising:
- a hydrogen generator, in particular an electrolyser,
- a hydraulic drive,
- two or more hydrogen storage tanks, and
- a hydrogen dispensing unit,
- wherein each of the hydrogen storage tanks is capable of discharging hydrogen at a constant pressure by movement of an internal piston ,
- wherein at least one of the hydrogen storage tanks is used as compressor by actuation of the internal piston by the hydraulic drive, and
- wherein at least one of the hydrogen storage tanks is used as a constant pressure tank for storing and discharging hydrogen at a constant pressure.

The invention can be implemented as a modular concept comprising a hydrogen generator, a compressor, a constant pressure tank and a hydrogen dispensing unit each forming separate modules. By varying the number and size of the modules it is possible to offer different hydrogen production capacities, different hydrogen storage capacities and different hydrogen pressures. The inventive system can be easily graded up and down with respect to hydrogen production capacity and of hydrogen storage capacity.

Thus, the invention provides an autonomous, self-contained small hydrogen refuelling station by combination of an efficient electrolyser with a compressor and one or more constant pressure tanks.

Preferably, an electrolyser is used as hydrogen generator. Such an electrolyser could for example comprise between 20 and 100 single cells which allow producing between about 1.2 kg and 6 kg hydrogen per day. The respective electrical energy consumption can be about 2 kW to 10 kW. According to another example, the electrolyser produces 5kg, 10 kg, 20 kg or up to 50 kg hydrogen per day. Preferably, the hydrogen production rate varies between 1.3kg hydrogen per day and 21.4kg hydrogen per day

According to a preferred embodiment of the invention the hydrogen generator produces hydrogen at a pressure between 1 and 45 bar, preferably at elevated pressures in the range between 20 and 45 bar. Hydrogen at these pressures can preferably be produced and supplied by an electrolyser.

The produced hydrogen is then compressed by a compressor to increase the pressure to a level at which ultimately the refuelling process takes place. At least one of the hydrogen storage tanks is used as the compressor. The compressor comprises a cylinder which is equipped with a piston that separates a hydrogen section from a hydraulic section. The hydraulic drive, for example a hydraulic pump, presses hydraulic fluid into the cylinder which in turn moves the internal piston so that the hydrogen present in the hydrogen section is slowly compressed. The compressed gas is subsequently directed to one or more of the constant pressure tanks to be stored.

The compressor is preferably designed as a one-stage compressor which is capable to compress hydrogen from the output pressure of the hydrogen generator to the desired end pressure. For example, the compressor is capable of compressing hydrogen from a pressure between 1 and 45 bar, preferably between 20 and 45 bar, to a pressure between 350 bar and 900 bar, for example 700bar or 850 bar, in one stage.

According to the invention the compressed hydrogen is stored in at least one constant pressure tank, for example in one, two or three constant pressure tanks. Such a constant pressure tank allows the storing of gas at a high pressure with minimal footprint. In contrast to traditional systems that can only use 20-30% of the stored gas for 700bar refuelling, the constant pressure tank is able to use 90% to 99% of the stored hydrogen. This is achieved by an internal piston that moves within the constant pressure tank as hydrogen is added or released. By moving the piston according to the amount of hydrogen introduced into the constant pressure tank or withdrawn from the constant pressure tank, the system is able to keep the pressure of the hydrogen at a pre-defined constant pressure and thereby use almost the entire amount of the stored hydrogen for the refuelling process. Another advantage of keeping the pressure constant is that there are no load cycles on the material which guarantees a high reliability and a long life cycle.

According to a preferred embodiment, the storage capability of the system is between 2.4 kg and 25 kg of hydrogen. This storage capability can be provided by one, two, three or more constant pressure tanks.

According to another embodiment, the hydrogen storage tanks, that is the hydrogen storage tank(s) used as compressor and the hydrogen storage tank(s) used as constant pressure tank(s), are designed for pressures up to 400 bar, preferably up to 800 bar, preferably up to 900 bar.

According to another embodiment, the hydrogen generator produces both hydrogen and oxygen. This is for example the case when an electrolyser is used for hydrogen production. Preferably, the electrolyser is able to generate hydrogen and oxygen at elevated pressure above ambient pressure.

The hydrogen produced by the electrolyser might contain water and/or oxygen which are preferably removed prior to or during pressurization of the hydrogen in the compressor. For removing the oxygen from the produced hydrogen stream preferably a catalyst can be used. For removing water vapor from the produced hydrogen stream a condenser can be used.

Before entering the compressor the hydrogen stream can preferably be cooled by an air-cooler.

In another embodiment, the pressurized oxygen can be used to further dry or dehumidify the produced hydrogen stream before entering the compressor. For such purpose, the produced oxygen is passed to an oxygen expander for reducing the pressure of the produced oxygen, e.g. by flowing through a nozzle. The pressure of the oxygen is preferably reduced from its pressure value present at the exit of the electrolyser to atmospheric pressure. By expanding the oxygen and reducing the oxygen pressure the temperature of the oxygen will decrease and the oxygen will cool down.

In a heat exchanger, the so cooled oxygen after its expansion and pressure reduction is brought into indirect heat exchange with the hydrogen flow upstream of the compressor. As a result, the hydrogen is cooled and water vapour in the hydrogen is condensed and can be removed from the hydrogen stream by means of a condenser. After exiting the heat exchanger the oxygen is released to ambient.

Preferably, an electrolyser is used as hydrogen generator. In this case it is preferred to provide a water reservoir which is connected to the electrolyser and which feeds the electrolyser. The water reservoir preferably supplies deionized water, either by connection of the water reservoir to a deionization system or by a tank with deionized water. As described above, a condenser is provided that separates water from the hydrogen stream. That water can be returned to the water reservoir via a return pipeline which connects the condenser with the water reservoir.

As already explained, the compressor and the constant pressure tanks are designed as hydrogen storage tanks with an internal piston. In one embodiment the hydrogen storage tank(s) used as compressor and the hydrogen storage tank(s) used as constant pressure tank(s) are identical.

In normal operation the compressor alternates between two phases: An accumulating phase during which the hydrogen generated by the electrolyser is collected in the compressor and the compression phase during which the collected hydrogen is compressed by the piston and transferred to the constant pressure tanks. When the compressor is in its compression phase and compressing hydrogen, the hydrogen produced by the hydrogen generator cannot be fed to the compressor. Therefore, it is preferred to have an additional hydrogen buffer tank upstream of the compressor which temporarily stores hydrogen during the compression phase of the compressor.

The inventive system is preferably connected to a wireless communication device, in particular a smart phone. Via the communication device the hydrogen production, the amount of hydrogen stored in the constant pressure tank(s) and / or the hydrogen withdrawn from the constant pressure tank(s) can be controlled and monitored. In addition the wireless communication link allows customers to check the filling level of the hydrogen storage tanks as well as to book their refuelling time-slot in advance and to make payments in exchange of the withdrawn quantity of hydrogen.

### Example:

Hydrogen is produced by means of an electrolyser. The hydrogen leaves the electrolyser with a pressure of 40bar. The hydrogen gas is then passed through a back pressure regulator, a catalyzer to separate possible residues of oxygen and an air-cooler for cooling the hydrogen gas. Downstream the air-cooler a condenser for removing possible residues of H₂O can be arranged in the hydrogen stream. The hydrogen gas is then passed to a hydrogen storage tank comprising an internal piston such storage tank acting as a compressor. A back pressure regulator prevents the hydrogen to flow back to the electrolyser. In the compressor a hydraulic piston moves up in a slow motion and compresses the hydrogen to the desired pressure level of for example 850 bar. Whilst the compressor system is running a downstream check valve opens and the hydrogen is directed to two constant pressure tanks for storage.

The constant pressure tanks are specifically designed to store high pressurized gas up to a pressure of 900 bar. An internal piston in the constant pressure tank divides the constant pressure tank into a hydrogen section and a hydraulic section. Once hydrogen gas is directed to the constant pressure tank, the piston moves in the same pace to increase the volume of the hydrogen section in the constant pressure tank as hydrogen gas is added in order to keep the pressure constant. Once the constant pressure tanks are filled or at least partially filled, the system is ready for refuelling.

The produced oxygen from the electrolyser is directed through a pressure retention valve and a catalyst to prevent excessive hydrogen in oxygen concentrations. The oxygen passes into an expander and is released to ambient. The cooling capacity of the expander is used to cool and dehumidify the hydrogen before reaching the compressor.

During the refuelling process the piston in the constant pressure tank is propelled by the hydraulic motor and presses the hydrogen out of the hydrogen section of the constant pressure tank. The refuelling of the vehicle is done via a dispensing nozzle.

Such refuelling process typically takes around 8 minutes per kg of hydrogen and meets all safety standards

The integration of the three components, the electrolyser, the compressor and the constant pressure tanks make the inventive system a highly efficient and cost effective solution for a small hydrogen refuelling station. The main advantages are the low power consumption and the small footprint while still maintaining a hydrogen flow which is high enough to meet existing standards.

The invention is in particular suitable for hydrogen refuelling purposes on existing gas stations, in car dealer delivery stations and repair shops, conventional petrol stations, restaurants, supermarkets, public authorities, postal services, industry on site, yachts, or buildings. The system according to the invention can be designed in particular as a mobile unit, i.e. if the economic requirements are no longer met (too low or too high demand), it can be easily disconnected from the supplies and moved to another location. The invention could even be installed on a trailer or a small truck.

The invention as well as preferred embodiments of the invention will be described with reference to the enclosed drawing.

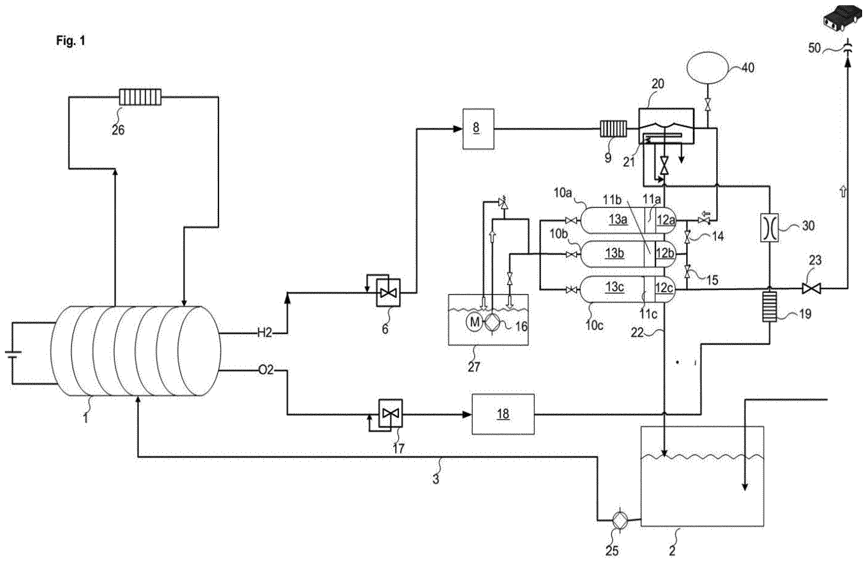

Figure 1 shows an inventive system for producing and dispensing hydrogen.

The inventive system as shown in figure 1 makes use of an electrolyser 1 as hydrogen generator. A cooling loop with integrated cooler 26 rejects generated process heat. A water reservoir 2 is connected to the electrolyser 1 via a water supply line 3 and supplies the electrolyser 1 by means of a pump 25 with deionized water at a pressure of for example 40 bar.

The electrolyser 1 produces hydrogen and oxygen at a pressure of around 40 bar. Depending on the type and size of the electrolyser the hydrogen production rate varies between 1.5 kg hydrogen per day and 20 kg hydrogen per day, preferably between 2.5 kg per day and 15 kg per day.

The produced hydrogen gas is then passed through a back pressure regulator 6 which automatically opens when the electrolyser reaches its operation pressure. The back pressure regulator 6 prevents the hydrogen to flow back to the electrolyser 1. The hydrogen is then passed through a catalyst 8 in order to remove any oxygen residues. The hydrogen gas can be cooled by an air cooler 9. Downstream of the air cooler 9 a condenser 20 is provided to remove water vapor from the hydrogen stream. As will be explained below in greater detail the oxygen generated by the electrolyser 1 at elevated pressure can be used as a coolant for such purpose.

The system comprises three identical hydrogen storage tanks 10a, 10b, 10c. The hydrogen storage tanks 10a, 10b, 10c are each provided with an internal piston 11a, 11b, 11c. The internal pistons 11a, 11b, 11c each divide the hydrogen storage tanks 10a, 10b, 10c into a hydrogen section 12a, 12b, 12c and a hydraulic section 13a, 13b, 13c.

One of the hydrogen storage tanks acts as a compressor 10a. The hydrogen gas leaving condenser 20 is passed into the hydrogen section 12a of the compressor 10a. In the compressor 10a the internal piston 11a moves in a slow motion and compresses the hydrogen to a pressure level of 850 bar. The piston 11a is driven by a hydraulic drive 16 which uses the hydraulic fluid provided by tank 27. Upstream of the compressor a hydrogen buffer tank 40 is provided which temporarily stores hydrogen during the compression phase of the compressor 10a. Once a compression phase of the compressor 10a is completed the hydrogen stored in the buffer tank 40 is led to the compressor 10a.

The hydrogen storage tanks 10b, 10c are used as constant pressure tanks. The compressed hydrogen is directed through check valves 14, 15 into the hydrogen sections 12b, 12c of the constant pressure tanks 10b, 10c for storage.

The pistons 11b, 11c of the constant storage tanks 10b, 10c are also actuated by the hydraulic drive 16. When hydrogen gas is added to the constant storage tanks 10b, 10c or withdrawn from the constant storage tanks 10b, 10c the piston 11b, 11c is moved accordingly such that the pressure in the hydrogen section 12b, 12c remains the same. Thus, the pressure in the hydrogen section 12b, 12c can be kept constant during filling of the constant pressure tanks 10b, 10c as well as during the refuelling process when hydrogen is withdrawn from the constant pressure tanks 10b, 10c.

The oxygen produced in the electrolyzer 1 is passed through a back pressure regulator 17, a catalyst 18 and an air cooler 19 into an expander 30. The expanded oxygen is finally vented in the atmosphere. During expansion of the oxygen in the expander 30 cold is produced. This cold is used to cool the hydrogen by indirect heat exchange before the hydrogen is compressed in the compressor 10a. For cooling the hydrogen, the cold oxygen is passed through a heat exchanger 21 arranged in the condenser 20. Any water which condenses out of the hydrogen is collected and directed via a condensate line 22 back to the water reservoir 2.

For refuelling the tank of a hydrogen-consuming vehicle or device, such as a vehicle tank, a valve 23 is opened and the piston 11b, 11c in the constant pressure tanks 10b, 10c is propelled by the hydraulic drive 16. Thereby, hydrogen gas is pushed out of the hydrogen section 12b, 12c of the constant pressure tank 10b, 10c and directed to a hydrogen dispensing unit formed by a dispensing nozzle 50 to refuel the vehicle.

## Claims

1. System for producing and dispensing pressurized hydrogen comprising:
- a hydrogen generator (1), in particular an electrolyser,
- a hydraulic drive (16),
- two or more hydrogen storage tanks (10a, 10b, 10c), and
- a hydrogen dispensing unit (50),
- wherein each of the hydrogen storage tanks (10a, 10b, 10c) is capable of discharging hydrogen at a constant pressure by movement of an internal piston (11a, 11b, 11c),
- wherein at least one (10a) of the hydrogen storage tanks (10a, 10b, 10c) is arranged to act as compressor by actuation of the internal piston (11a) by means of the hydraulic drive (16), and
- wherein at least one (10a) of the hydrogen storage tanks (10a, 10b, 10c) is arranged to act as a constant pressure tank for storing and discharging hydrogen at a constant pressure.

2. System according to claim 1, **characterized in that** the hydrogen generator (1) produces hydrogen at a pressure between 1 and 45 bar, preferably between 20 and 45 bar.

3. System according to any of the preceding claims, **characterized in that** the hydrogen storage tanks (10a, 10b, 10c) are designed for pressures up to 350 bar, preferably up to 800 bar, preferably up to 900 bar.

4. System according to any of the preceding claims, **characterized in that** a catalyst (8) for removing oxygen residues from the hydrogen is provided.

5. System according to any of the preceding claims, **characterized in that** the hydrogen generator (1) produces hydrogen and oxygen and that an oxygen expander (30) for reducing the pressure of the produced oxygen and thereby cooling of the produced oxygen is provided and that a heat exchanger (21) for transferring heat between the cooled oxygen and the hydrogen downstream of the electrolyser (1) and upstream of the compressor (10a) is provided.

6. System according to any of the preceding claims, **characterized in that** a condenser (20) for separating water from the compressed hydrogen is arranged upstream of the compressor (10a) .

7. System according to claim 6, **characterized in that** a water reservoir (2) is provided wherein the water reservoir (2) is connected to the electrolyser (1) and that a return pipeline (3) is provided connecting the condenser (20) with the water reservoir (2).

8. System according to any of the preceding claims, **characterized in that** the hydrogen storage tanks (10a, 10b, 10c) are identical.

9. System according to any of the preceding claims, **characterized in that** a hydrogen buffer tank (40) is provided upstream of the compressor (10a).

10. System according to any of the preceding claims, **characterized in that** the compressor (10a) is a one-stage compressor.

11. System according to any of the preceding claims, **characterized in that** a wireless communication device, in particular a smart phone, is connected to the system and configured to allow customers to check the current filling level of the hydrogen storage tanks and to book a time slot for refuelling.

12. System according to any of the preceding claims, **characterized in that** it is arranged as a mobile unit.
